(19) Europäisches Patentamt
European Patent Office
Office européen des brevets

(11) **EP 3 538 922 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **17769016.1**

(22) Anmeldetag: **12.09.2017**

(51) Internationale Patentklassifikation (IPC):
**G01S 13/931** (2020.01)   **G01S 13/34** (2006.01)
**G01S 7/02** (2006.01)   **G01S 7/35** (2006.01)

(52) Gemeinsame Patentklassifikation (CPC):
**G01S 13/931; G01S 7/0232; G01S 7/0234; G01S 13/343; G01S 13/347;** G01S 7/023; G01S 7/356

(86) Internationale Anmeldenummer:
**PCT/EP2017/072837**

(87) Internationale Veröffentlichungsnummer:
**WO 2018/086783 (17.05.2018 Gazette 2018/20)**

(54) **RADARSENSOR FÜR KRAFTFAHRZEUGE**

RADAR SENSOR FOR MOTOR VEHICLES

CAPTEUR RADAR POUR VÉHICULES À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2016 DE 102016221947**

(43) Veröffentlichungstag der Anmeldung:
**18.09.2019 Patentblatt 2019/38**

(73) Patentinhaber: **Robert Bosch GmbH**
**70442 Stuttgart (DE)**

(72) Erfinder:
• **HAKOBYAN, Gor**
**70563 Stuttgart (DE)**
• **ARMANIOUS, Karim Adel Dawood**
**70563 Stuttgart (DE)**
• **SCHOOR, Michael**
**70195 Stuttgart (DE)**

(56) Entgegenhaltungen:
WO-A1-2014/075838   WO-A1-2014/195046
WO-A1-2017/118632   DE-A1-102013 200 404
DE-A1-102013 212 090   DE-A1-102014 226 030
DE-A1-102015 202 874

**Beschreibung**

Die Erfindung betrifft einen Radarsensor für Kraftfahrzeuge, mit einem Signalgenerator, der dazu konfiguriert ist, ein Radarsignal zu erzeugen, das eine sich zyklisch wiederholende Folge von N Wellenzügen $W_j, j = 1, ..., N$ enthält, die aufeinanderfolgend in zeitlichen Abständen $T'_{c,j}$ gesendet werden und die jeweilige Frequenzbänder belegen, die sich in ihren Mittenfrequenzen $f_{c,j}$ voneinander unterscheiden.

Stand der Technik

Radarsysteme zur Messung von Abstand, Relativgeschwindigkeit und Winkel von Objekten (wie z.B. von Fahrzeugen und Hindernissen) werden zunehmend in Kraftfahrzeugen für Sicherheits- und Komfortfunktionen eingesetzt. Dabei spielt die Genauigkeit von Radarmessungen im Abstand, Geschwindigkeit und Winkel eine immer wichtigere Rolle, da die Fahrerassistenzsysteme und autonome Fahrfunktionen eine möglichst genaue Umfelderfassung benötigen.

Des Weiteren ist die Trennfähigkeit des Radarsensors in allen drei Parametern ein wichtiges Kriterium, d.h. die Fähigkeit, in gegebener Dimension zwei nahe Ziele voneinander zu unterscheiden. Grundsätzlich gilt, dass die Trennfähigkeit des Radars im Abstand lediglich von der effektiven Bandbreite abhängt, die Geschwindigkeits-Trennfähigkeit von der Messzeit abhängig ist, und die Winkel-Trennfähigkeit mit der Größe der Antennenapertur zusammenhängt. Für die Verbesserung der Abstands-Trennfähigkeit sollten daher größere Bandbreiten gefahren werden, während für eine verbesserte Geschwindigkeits-Trennfähigkeit längere Messzeiten notwendig sind. Die Vergrößerung der Bandbreite erfordert eine Erhöhung der Analog-zu-Digital Wandler-(ADC) -Raten und erhöht den Rechenaufwand. Die Vergrößerung der Abstands-Trennfähigkeit kann auch dadurch erreicht werden, dass während der Messung die Trägerfrequenz verschoben wird, und somit effektiv das für die Messung genutzte Frequenzband vergrößert wird.

Für die Winkelschätzung finden zunehmend MIMO-Systeme (MIMO: multiple input, multiple output) Verwendung, bei denen mehrere Sende- und Empfangsantennen eingesetzt werden. Mithilfe des MIMO-Prinzips lassen sich insbesondere besonders genaue Winkelmessungen vornehmen, wobei die für die Winkelmessung wichtige Antennenapertur (Antennenfläche) virtuell vergrößert wird. Dabei senden mehrere Sendeantennen unbeeinflusst voneinander ihre Signale aus, und diese Signale werden in den Empfangskanälen getrennt. Die virtuelle Vergrößerung der Apertur kommt dadurch zustande, dass der Abstand der Sendeantennen zu den Empfangsantennen unterschiedlich ist und somit rechnerisch so verfahren werden kann, als ob nur eine Sendeantenne vorhanden wäre, aber die Zahl der Empfangsantennen sich vervielfältigt und sich somit virtuell eine größere Antennenapertur ergibt. Um einen störungsfreien Betrieb mehrerer Sendeantennen zu ermöglichen, sollten diese getrennt werden, z.B. durch zeitliche Trennung (Time-Division Multiplexing (TDM)) oder Trennung in der Frequenz (Frequency-Division Multiplexing (FDM)).

Die obigen Ausführungen gelten unabhängig vom eingesetzten Modulationsverfahren. Typische Sendefrequenzen liegen heute bei 24 GHz oder 77 GHz, die maximal belegbaren Bandbreiten liegen bei < 4 GHz, typischerweise aber deutlich darunter (z.B. 0,5 GHz).

Heutige Kfz-Radarsysteme setzen in der Regel eine FMCW-Modulation (frequencymodulated continuous wave) ein, bei der nacheinander mehrere lineare Frequenzrampen unterschiedlicher Steigung durchlaufen werden. Die Mischung des momentanen Sendesignals mit dem Empfangssignal ergibt ein niederfrequentes Signal, dessen Frequenz zum Abstand proportional ist, das aber noch eine additive/subtraktive Komponente durch eine Dopplerfrequenz, die zur Relativgeschwindigkeit proportional ist, enthält. Die Trennung von Abstands- und Geschwindigkeitsinformation mehrerer Ziele erfolgt durch ein kompliziertes Verfahren, bei dem die Ergebnisse der verschiedenen Rampen einander zugeordnet werden (sogenanntes Matching).

Neuere Systeme setzen auf eine FMCW-Modulation mit deutlich schnelleren Rampen (Fast-Chirp-Modulation bzw. Chirp-Sequence Modulation), wodurch die Dopplerverschiebung innerhalb einer Rampe vernachlässigbar wird. Die gewonnene Abstands-Information ist weitgehend eindeutig, eine Dopplerverschiebung kann anschließend durch Beobachtung der zeitlichen Entwicklung der Phase des komplexen Abstandssignals bestimmt werden. Die Abstands- und Geschwindigkeitsbestimmung findet unabhängig voneinander statt, in der Regel mit zweidimensionaler Fouriertransformation.

Im Stand der Technik, z.B. WO 2014/075838 A1 sowie WO 2015/197226 A1, WO 2014/195046, DE 10 2013 200 404 A1, und DE 10 2013 212 090 A1, sind spezielle Ausführungen der Fast-Chirp Modulation bekannt, die durch größere zeitliche Abstände in den äquidistanten Rampensequenzen der Radarsignale gezielt eine Mehrdeutigkeit in der Geschwindigkeitsschätzung verursachen. Diese Mehrdeutigkeiten werden durch die Nutzung mehrerer äquidistanter Sequenzen der Radarsignale nach der zweidimensionalen Fourier-Auswertung aufgelöst, wodurch die Eindeutigkeit im gewünschten Geschwindigkeitsbereich wiederhergestellt wird. Dieser Ansatz hat den Vorteil, dass die Dauer der Senderampen vergrößert werden kann, wodurch z.B. die Rampensteilheit reduziert werden kann, und infolgedessen die ADC-Raten und der Rechenaufwand sinken.

Zukünftig werden auch digital erzeugte Modulationsverfahren eine wichtige Rolle in Kfz-Radarsystemen spielen. Digitale Modulationsverfahren wie OFDM (orthogonal frequency division multiplex) werden bereits heute in vielen Anwendungen (WLAN, LTE, DVB-T) erfolgreich für Kommunikationszwecke eingesetzt. Es sind bereits einige Dissertationen und Veröffentlichungen zu Radarsystemen mit digitaler Modulation, die dem OFDM-Grundprinzip nachempfunden ist, erschienen. Diese Arbeiten nutzen sequenziell nacheinander gesendete OFDM Symbole, wodurch, ähnlich wie bei Fast-Chirp-Systemen, die Abstands- und Geschwindigkeits-Auswertung unabhängig voneinander durchgeführt werden kann. Dazu kann eine zweidimensionale Fouriertransformation eingesetzt werden, wobei die gesendeten Modulationssymbole vorab eliminiert werden müssen. Alternativ kann die Geschwindigkeitsmessung mit Fouriertransformation und die Abstandsmessung mit "Matched Filtering" durchgeführt werden. Auch DE 2015 202 874 A1 beschreibt ein OFDM-Radar.

Die Fast-Chirp- und OFDM-Radarsysteme haben ein gemeinsames Messprinzip zur Abstands- und Geschwindigkeitsmessung. Bei beiden Systemen entsteht nach der analogen bzw. digitalen Demodulation eine zweidimensionale Schwingung, deren Frequenz in einer Dimension zum Abstand und in anderer Dimension zur Dopplerfrequenz, d.h. zur Relativgeschwindigkeit der Ziele proportional ist. Daher wird bei beiden Systemen für die Abstands- und Geschwindigkeitsauswertung typischerweise die zweidimensionale Fouriertransformation eingesetzt. Dabei hängt sowohl die Dopplerfrequenz als auch die Anfangsphase des Empfangssignals mit der Trägerfrequenz zusammen.

Daraus folgt, dass die Änderung der Trägerfrequenz während der Messung zur Änderung des Phasenverlaufs über den Wellenzug hinweg (im Folgenden als "langsame Zeit" bezeichnet) führt, und somit die Fourier-Auswertung in dieser Dimension beeinflusst. Während im Stand der Technik Ansätze für Fast-Chirp Modulation bekannt sind, aus dieser Abhängigkeit durch eine lineare Änderung der Trägerfrequenz Zusatzinformationen zur verbesserten Abstandsschätzung zu gewinnen (z.B. DE 10 2013 200 404 A1), wird die Geschwindigkeitsschätzung dabei negativ beeinflusst. Somit stellt dieser Ansatz für Fast-Chirp Systeme ein Kompromiss zwischen der Verbesserung der Abstandsschätzung und Verschlechterung der Geschwindigkeitsschätzung dar.

Des Weiteren gewinnen kognitive Radar-Ansätze immer mehr Bedeutung, da die Anzahl der Radarsensoren im KFZ-Bereich ständig steigt, und somit die Wahrscheinlichkeit der Störung durch andere Radarsensoren sich erhöht. Mit einem kognitiven Ansatz soll sich das Radar adaptiv an die Umgebung anpassen können, um unter anderem auf die Interferenz von anderen Radarsensoren zu reagieren und somit diese möglichst zu vermeiden. Die Adaption kann von Messzyklus zu Messzyklus durch die Anpassung der Trägerfrequenz erfolgen, oder auch innerhalb eines Messzyklus, etwa durch die Anpassung der Trägerfrequenzen einzelner Radarwellenzüge (Rampen, OFDM Symbole, etc.). Auch hier entsteht das Problem, dass der Phasenverlauf über die langsame Zeit von der Trägerfrequenz, dem Abstand, und der Geschwindigkeit abhängt, und die Änderung der Trägerfrequenz zu einer nichtlinearen Änderung der Phase führt. Das hat zur Folge, dass die Geschwindigkeitsschätzung (z.B. mit einer Fourier-Auswertung) beeinträchtigt wird oder gar nicht möglich ist.

Offenbarung der Erfindung

Aufgabe der Erfindung ist es deshalb, ein Verfahren anzugeben, das es erlaubt, die Abstände und Relativgeschwindigkeiten eindeutig und mit noch höherer Genauigkeit zu messen.

Ausgangspunkt der Erfindung ist ein Radarsensor der eingangs genannten Art, wie er beispielsweise auch aus DE 10 2013 200 404 A1 bekannt ist. Die aufeinanderfolgenden Wellenzüge werden bei diesem bekannten Radarsensor durch die einzelnen Frequenzrampen gebildet. Diese Frequenzrampen sind jedoch äquidistant, d.h., dass die Sendezeitpunkte der Wellenzüge durch feste und gleiche Zeitintervalle voneinander getrennt sind.

Die gestellte Aufgabe wird nun erfindungsgemäß dadurch gelöst, dass für die zeitlichen Abstände $T'_{c,j}$ und die Mittenfrequenzen $f_{c,j}$ die Beziehung:

$$T'_{c,j} * f_{c,j} = X$$

mit einem konstanten Parameter X gilt.

Bei dem erfindungsgemäßen Radarsensor sind somit die einzelnen Wellenzüge, die beispielsweise wie im Stand der Technik durch Frequenzrampen mit konstanter und gleicher Steigung und gleichem Frequenzhub oder beispielsweise auch durch OFDM-Symbole gebildet werden können, nicht mehr äquidistant, sondern die Sendezeitpunkte werden abhängig von der jeweiligen Mittenfrequenz so variiert, dass die oben genannte Beziehung eingehalten wird. Die Folge ist, dass das Produkt aus der Sendezeit $T_j$ des j-ten Wellenzuges und der Mittenfrequenz $f_{c,j}$, das den Phasenverlauf über die langsame Zeit bestimmt, eine lineare Funktion des Rampenindex j ist. Dadurch werden im Phasenverlauf die Nichtlinearitäten beseitigt, die beim Stand der Technik durch die Variation der Mittenfrequenzen $f_{c,j}$ entstehen und die bei der Fouriertransformation über die langsame Zeit, also über den Index j, zu einer Peakverbreiterung und damit zu einer Beeinträchtigung der Messgenauigkeit und der Trennfähigkeit insbesondere bei der Geschwindigkeitsmessung führen würden.

Auf diese Weise erlaubt es die Erfindung, die Mittenfrequenzen nach Bedarf zu variieren, beispielsweise um die Messgenauigkeit und Trennfähigkeit bei der Abstandsmessung zu optimieren oder um bei einem kognitiven Radarsystem den Interferenzen mit anderen Radarsignalen auszuweichen, ohne dass darauf Rücksicht genommen werden muss, welchen Effekt diese Änderungen der Mittenfrequenzen auf die Geschwindigkeitsmessung haben.

Der Begriff "Mittenfrequenz" dient hier dazu, die Frequenzlage des betreffenden Wellenzuges zu charakterisieren. Dieser Begriff wurde nur seiner Verständlichkeit wegen gewählt und ist nicht so auszulegen, dass die "Mittenfrequenz" zwingend genau in der Mitte zwischen der kleinsten Frequenz und der höchsten Frequenz des Wellenzuges liegen muss. Es ist lediglich zu verlangen, dass die Mittenfrequenzen durch Punkte im Frequenzband definiert werden, die bei den verschiedenen Wellenzügen einander entsprechen.

Die Folge der Sendezeitpunkte $T_j$ bestimmt die zeitlichen Abstände $T'_{c,j}$ zwischen den einzelnen Wellenzügen oder Rampen. Beispielsweise kann man als Sendezeitpunkt in jedem Wellenzug denjenigen Zeitpunkt definieren, an dem die Frequenz des gesendeten Signals die Mittenfrequenz durchläuft. Ebenso gut könnte man aber beispielsweise auch den Startpunkt oder den Endpunkt des Wellenzuges als Sendezeitpunkt betrachten.

Vorteilhafte Ausgestaltungen der Erfindung sind in den Unteransprüchen angegeben.

Im folgenden wird ein Ausführungsbeispiel anhand der Zeichnung näher erläutert.

Es zeigen:

Fig. 1     ein Blockdiagramm eines FMCW-Radarsystems;

Fig. 2     ein Beispiel eines Frequenzmodulationsschemas;

Fig. 3     eine Folge von Zwischenfrequenz-Zeitsignalen sowie deren Fouriertransformierte;

Fig. 4     einen Längsschnitt der Zeitsignale nach Fig. 3 sowie die Fouriertransformierte dieses Längsschnittes;

Fig. 5     ein Diagramm zur Illustration des Ergebnisses einer zweidimensionalen Fouriertransformation;

Fig. 6     einen Längsschnitt analog zu Fig. 4, für eine andere Relativgeschwindigkeit;

Fig. 7     ein Diagramm zur Erläuterung eines Modulationsschemas mit variierenden Mittenfrequenzen;

Fig. 8     ein Diagramm analog zu Fig. 5, zur Illustration des Effekts des Modulationsschemas nach Fig. 7; und

Fig. 9     ein Diagramm zur Erläuterung eines erfindungsgemäßen Modulationsschemas.

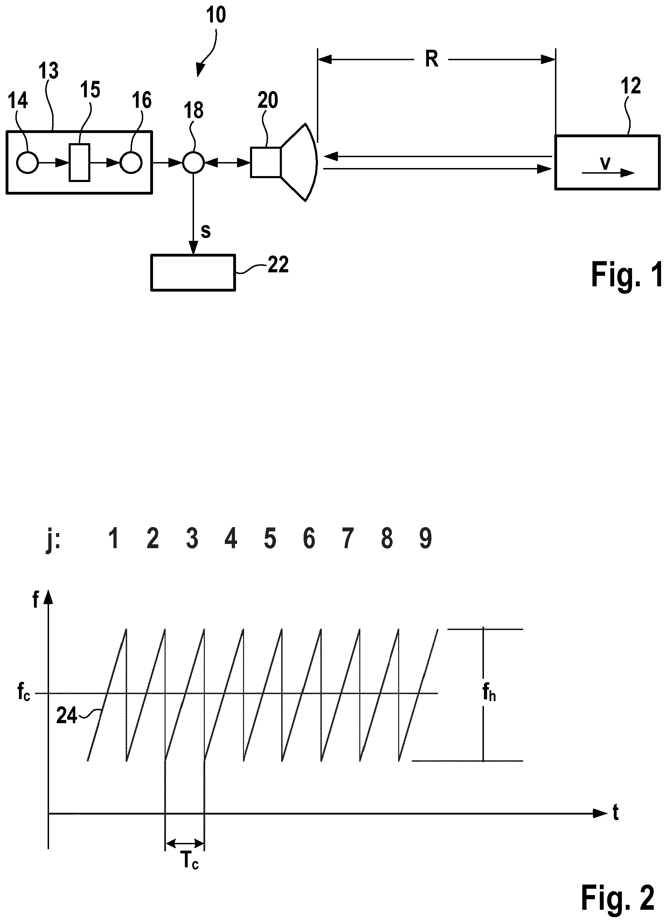

In Fig. 1 ist als vereinfachtes Blockdiagramm ein FMCW-Radarsensor 10 dargestellt, der beispielsweise vorn in einem Kraftfahrzeug eingebaut ist und dazu dient, Abstände R und Relativgeschwindigkeiten v von Objekten 12 zu messen, beispielsweise von vorausfahrenden Fahrzeugen. Der Radarsensor 10 weist einen Signalgenerator 13 mit einem Oszillator 14, einen Modulator 15 und einem Mischer 16 auf, der vom Modulator erzeugte Wellenzüge durch mischen mit einer jeweiligen Trägerfrequenz in ein Hochfrequenzband hoch mischt und so ein zu sendendes Radarsignal erzeugt. Alternativ kann die Signalerzeugung je nach Wellenzug direkt mithilfe eines Oszillators erfolgen. Dieses Radarsignal wird dann über einen Sende- und Empfangsmischer 18 an eine Sende- und Empfangseinrichtung 20 geliefert, von der das Signal in Richtung auf das Objekt 12 ausgesandt wird. Das an dem Objekt reflektierte Signal wird von der Sende-und Empfangseinrichtung 20 empfangen und in dem Sende- und Empfangsmischer 18 mit einem Anteil des Sendesignals gemischt. Auf diese Weise erhält man ein Zwischenfrequenzsignal s, das in einer elektronischen Auswerte- und Steuereinrichtung 22 weiter ausgewertet wird.

Fig. 2 zeigt ein Beispiel für ein Modulationsschema des vom Signalgenerator 13 gelieferten Sendesignals. Die Frequenz f des Sendesignals ist hier als Funktion der Zeit t aufgetragen. Die Frequenz wird in der Form von aufeinanderfolgenden identischen Wellenzügen moduliert, die im folgenden auch als "Rampen" 24 bezeichnet werden sollen. Die Rampen 24 sind in Fig. 2 fortlaufend mit einem Index j numeriert. Die mittlere Frequenz (Mittenfrequenz $f_c$) des Sendesignals liegt in der Größenordnung von 76 GHz, und der Frequenzhub $f_h$, um den sich die Frequenz im Verlauf jeder Rampe ändert, liegt in der Größenordnung von einigen MHz bis zu wenigen GHz. Der zeitliche Abstand $T'_c$, in dem die Rampen 24 aufeinanderfolgen, liegt in der Größenordnung von einigen Mikrosekunden bis hin zu wenigen Millisekunden. Da im gezeigten Beispiel die Rampen 24 ohne Pause aufeinanderfolgen, gibt $T'_c$ zugleich die Rampendauer $T_c$ an.

Die Frequenz des Zwischenfrequenzsignals s entspricht dem Frequenzunterschied zwischen dem Sendesignal, das vom Sende- und Empfangsmischer 18 an die Sende- und Empfangseinrichtung 20 weitergeleitet wird, und dem Signal, das nach Reflexion an dem Objekt 12 von der Sende- und Empfangseinrichtung 20 empfangen wurde und wieder am Sende- und Empfangsmischer 18 eintrifft. Dieser Frequenzunterschied setzt sich additiv zusammen aus einem abstandsabhängigen Anteil $f_R$ und einem geschwindigkeitsabhängigen Anteil $f_v$. Der abstandsabhängige Anteil $f_R$ resultiert aus der Frequenzmodulation und ist in dem hier gezeigten Beispiel gegeben durch:

$$f_R = 2\,R\,f_h\,/\,(c\,T_c)\qquad\qquad\qquad\qquad(1)$$

wobei c die Lichtgeschwindigkeit ist. Der geschwindigkeitsabhängige Anteil resultiert aus dem Dopplereffekt und ist näherungsweise gegeben durch:

$$f_D = 2\,f_c\,v\,/\,c.\qquad\qquad\qquad\qquad(2)$$

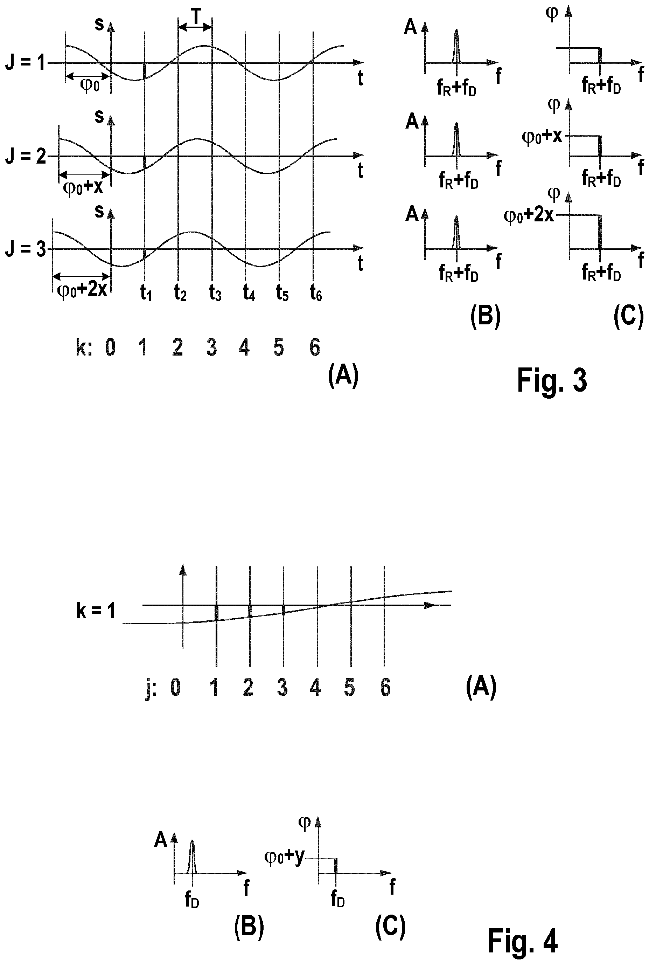

In Fig. 3 (A) sind, unter der Annahme, dass nur ein einzelnes Objekt geortet wird, die Zwischenfrequenzsignale s für die ersten drei Rampen j = 1 bis j = 3 als Funktionen der Zeit t (Zeitsignale) dargestellt. In der Auswerte- und Steuereinrichtung wird das als analoges Signal vom Mischer 18 gelieferte Zeitsignal periodisch, zu Abtastzeitpunkten $t_1$, $t_2$, ..., abgetastet, digitalisiert und gespeichert. Die Abtastzeitpunkte sind mit den Modulationsrampen des Sendesignals synchronisiert und innerhalb jeder Rampe mit dem Index k numeriert. Die Abtastperiode, also der zeitliche Abstand zwischen den einzelnen Abtastzeitpunkten, ist mit T bezeichnet.

Durch schnelle Fouriertransformation (FFT) lässt sich das Zeitsignal für jede Rampe in ein Spektrum umwandeln, das die (komplexe) Amplitude des Zwischenfrequenzsignals als Funktion der Frequenz f angibt. In Fig. 3 (B) und (C) sind für jede der drei Rampen zwei kleine Diagramme dargestellt, die den Absolutbetrag A und die Phase $\varphi$ als Funktion der Frequenz f angeben.

Unter der Annahme, dass nur ein einzelnes Objekt vorhanden ist, weist das auf einer einzelnen Rampe aufgenommene Spektrum einen scharfen Peak 26 bei der Frequenz $f_R + f_D$ auf. Wegen des geringen zeitlichen Abstands $T'_c$ der Rampen bleiben die Frequenzen $f_R + f_D$ praktisch unverändert, so dass der Peak 26 in allen drei in Fig. 3 (B) gezeigten Spektren an derselben Stelle liegt.

Wenn jedoch die Relativgeschwindigkeit des Objektes nicht gleich null ist, so führt die geringfügige Abstandsänderung des Objektes, die innerhalb der Rampendauer $T_c$ eintritt, zu einer Phasenverschiebung des Zwischenfrequenzsignals, wie sie in Fig. 3A dargestellt ist. Von Rampe zu Rampe nimmt die Phase jeweils um einen bestimmten Betrag x zu. Wenn mit $\varphi_0$ die Phase auf der ersten Rampe (j = 1) bezeichnet ist, so hat bei äquidistanten Rampenabständen die Phase auf der zweiten Rampe (j = 2) den Wert $\varphi_0 + x$ und auf der dritten Rampe (j = 3) den Wert $\varphi_0 + 2x$.

Allgemein lässt sich das Zwischenfrequenzsignal s als Funktion des Abtastindex k und des Rampenindex j wie folgt beschreiben:

$$s(k,j) = \exp(\,i(\varphi_0\; +\; 2\pi\,(f_R + f_D)\,k\,T\; +\; 2\pi\,f_D\,(j\text{-}1)\,T'_c))\qquad\qquad(3)$$

Der Term $(f_R + f_D)\,k\,T$ repräsentiert die Laufzeit- und Dopplereffekte innerhalb einer einzelnen Rampe. Der Term $f_D\,(j\text{-}1)\,T'_c$ repräsentiert den Effekt der leichten Änderung des Objektabstands von Rampe zu Rampe und ist nur von dem geschwindigkeitsabhängigen Anteil $f_D$ (der Dopplerfrequenz) abhängig. Der Wert $\varphi_0$ ist ein Phasen-Offset, der hier gegeben ist durch

$$\varphi_0 = 4\pi\,R\,f_c\,/\,c\qquad\qquad\qquad\qquad(4)$$

wobei $f_c$ die Mittenfrequenz der Frequenzrampen ist. Einsetzen von Gleichung (4) in Gleichung (3) liefert:

$$s(k,j) = \exp(\,i(4\pi\,R\,f_c\,/\,c\; +\; 2\pi\,(f_R + f_D)\,k\,T\; +\; 2\pi\,f_D\,(j\text{-}1)\,T'_c))\qquad\qquad(5)$$

Wenn man, wie in Fig. 3, eine Fouriertransformation jeweils nur innerhalb einer einzelnen Rampe ausführt (über den Index k bei festem j), so liefert der Term $f_D\,(j\text{-}1)\,T'_c$ in Gleichung (3) jeweils nur einen Beitrag x, 2x, ... zur Phase.

Man kann jedoch auch eine Fouriertransformation über einen "Längsschnitt" der Zeitsignale ausführen, indem man den Abtastindex k festhält und die schnelle Fouriertransformation über den laufenden Rampenindex j (über die sogenannte "langsame Zeit") ausführt. In Fig. 4 ist dies symbolisch für den Abtastindex k = 1 dargestellt. In Fig. 3 sind die Funktionswerte zum Abtastzeitpunkt $t_1$ als dicke Balken dargestellt. Die gleichen Balken sind auch in Fig. 4 (A) gezeigt. Sie sind hier jedoch gegen den Rampenindex j aufgetragen. Aufgrund des Phasenversatzes von Rampe zu Rampe erhält man wiederum eine periodische Funktion, die man einer Fouriertransformation unterziehen kann. Das Ergebnis ist in Fig. 4 (B) und (C) wiederum als Diagramm für den Betrag A und die Phase φ der komplexen Amplitude dargestellt. Diese Fouriertransformationen, die man für jedes k ausführen kann, liefern bei einem einzelnen Objekt einen scharfen Peak bei der Dopplerfrequenz $f_D$. Die Phase setzt sich zusammen aus dem Phasen-Offset $φ_0$ und einem Anteil y (= $f_R$ + $f_D$) k T.

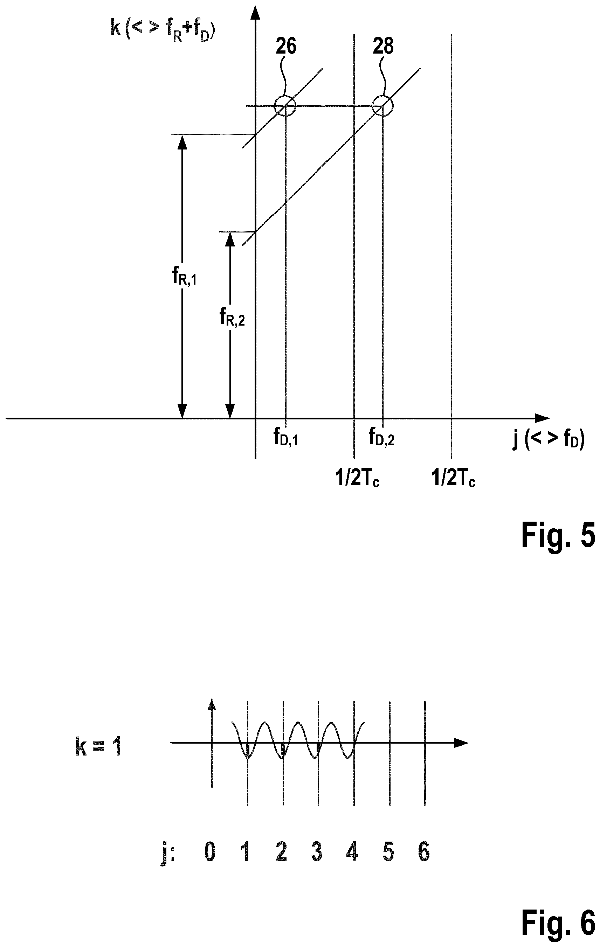

Für die Berechnung des Abstands R und der Relativgeschwindigkeit v des Objekts werden nur die Frequenzanteile $f_R$ und $f_D$ benötigt. Wie Fig. 4 zeigt, liefern die Spektren, die durch Fouriertransformation über den Rampenindex j gewonnen werden, den Frequenzanteil $f_D$, während die Fouriertransformation innerhalb jeder einzelnen Rampe gemäß Fig. 3 die Summe $f_R$ + $f_D$ der Frequenzanteile liefert. Aus beiden Größen zusammen lässt sich dann der Frequenzanteil $f_R$ und damit der Abstand R berechnen. Ein besonders elegantes Auswertungsverfahren besteht darin, dass die oben beschriebenen Fouriertransformationen zu einer sogenannten zweidimensionalen Fouriertransformation zusammengefasst werden. Dabei werden die auf mehreren aufeinanderfolgenden Rampen gewonnenen Zeitsignale in einen zweidimensionalen Frequenzraum transformiert dessen Koordinaten die Dopplerfrequenz $f_D$ und die Summe $f_R$ + $f_D$ sind, wie in Fig. 5 gezeigt ist. In diesem zweidimensionalen Frequenzraum findet sich der Peak 26 dann bei einer Position $f_{D,1}$ auf der waagerechten Achse, die der Dopplerfrequenz und damit der Relativgeschwindigkeit v des Objekts entspricht, und seine Position auf der vertikalen Achse ist $f_{R,1}$ + $f_{D,1}$. In diesem Diagramm liegen die Peaks von Objekten, die den gleichen Abstand ($f_R$ konstant) aber unterschiedliche Relativgeschwindigkeiten ($f_D$ variabel) haben, auf 45°-Geraden. Wo die 45°-Gerade, die durch den Peak 26 geht, die vertikale Achse schneidet, lässt sich der abstandsabhängige Frequenzanteil $f_{R,1}$ unmittelbar ablesen und in einen zugehörigen Abstand $R_1$ umrechnen.

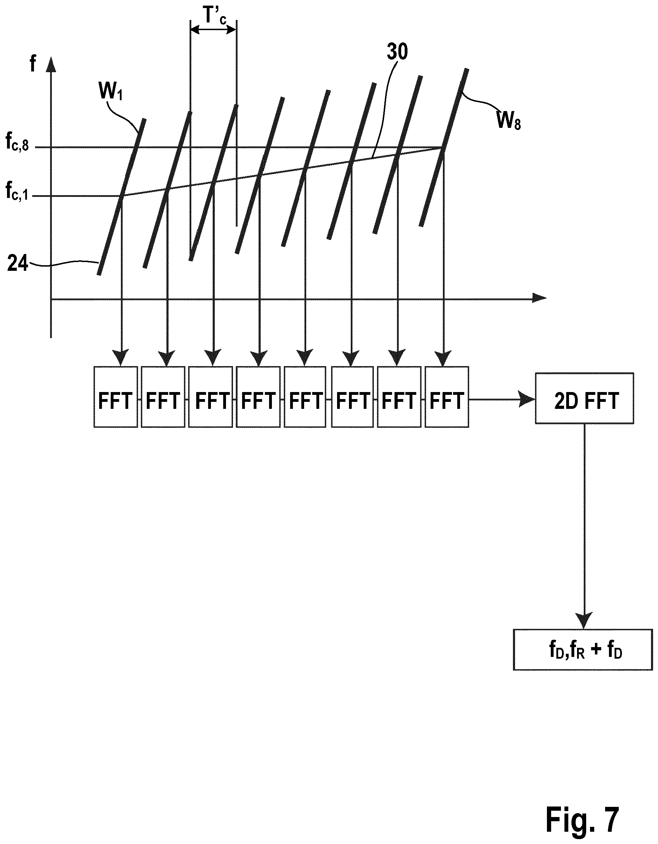

Es ist vorteilhaft, anstelle des in Fig. 2 gezeigten Modulationsschemas ein Modulationsschema zu verwenden, das in Fig. 7 gezeigt ist. Bei diesem Modulationsschema sind die N (=8) aufeinanderfolgenden Rampen 24 gegeneinander frequenzversetzt. Die Rampen 24 haben die gleiche Dauer und den gleichen Frequenzhub, sind jedoch um einen festen Frequenzabstand $f_s$ gegeneinander verschoben, so dass für die Mittenfrequenzen $f_{c,j}$ gilt:

$$f_{c,j} = f_{c,j-1} + f_s \qquad\qquad (6)$$

so dass die Folge der Wellenzüge $W_j$, j = 1, ... 8, ("schnelle Rampen 24") insgesamt eine "langsame" Rampe 30 mit dem Frequenzhub N $f_s$ bildet (mit N = 8 in diesem Beispiel).

Wahlweise können die einzelnen Rampen 24 jeweils durch eine Pause getrennt sein. Im gezeigten Beispiel folgen die Rampen 24 jedoch ohne Pause aufeinander, so dass der zeitliche Abstand $T'_c$ wieder gleich der Rampendauer $T_c$ ist.

Die anhand von Fig. 1 bis 3 beschriebene Auswertungsprozedur kann nun für jede einzelne Rampe 24 ausgeführt werden. Die dabei erhaltenen Zwischenfrequenzsignale s unterscheiden sich vor allem in ihrem Phasen-Offset. Die Auswertung dieses Phasen-Offsets ermöglicht eine verbesserte Abstandsschätzung.

Dazu werden, wie in Fig. 7 symbolisch dargestellt ist, die Zeitsignale, die man für die Schar der Rampen 24 enthält, einer zweidimensionalen schnellen Fouriertransformation (2D FFT) unterzogen. In den Fouriertransformationen über den Index k dominiert aufgrund der große Rampensteigung der abstandsabhängige Term, der zu $f_R$ + $f_D$ proportional ist. Für ein einzelnes geortetes Objekt erhält man durch diese Transformationen einen Peak dessen Lage auf der k-Achse eine erste Beziehung zwischen dem Abstand R und der Geschwindigkeit v des Objekts liefert. Die Fouriertransformationen über den Index j entsprechen einer Messung auf der Rampe 30 mit der kleineren Rampensteigung $f_s$ $T'_c$ und der längeren Messzeit (N-1) $T'_c$. Für das einzelne Objekt erhält man hier einen Peak, dessen Lage auf der j-Achse eine zweite Beziehung zwischen Abstand und Geschwindigkeit liefert. Die beste Schätzung für den Abstand und die Geschwindigkeit ergibt sich dann aus der Forderung das beide Beziehungen für dasselbe Wertepaar (R, v) erfüllt sein müssen. Auf diese Weise erhält man die Koordinaten $f_D$ und $f_R$ + $f_D$ des "wahren" Peaks 26 in Fig. 5.

Durch die Verschiebung der Mittenfrequenzen auf der Rampe 30 wird die Bandbreite insgesamt erhöht und damit die Abstandsschätzung verbessert, obwohl die ADC-Raten bei der Auswertung nicht höher zu sein brauchen als bei dem Modulationsschema nach Fig. 2. Allerdings muss in der bisher beschriebenen Version des Verfahrens eine Einbuße bei der Genauigkeit der Geschwindigkeitsmessung in Kauf genommen werden. Der Grund ist, dass die Variation der Mittenfrequenzen $f_{c,j}$ von Rampe zu Rampe zu Nichtlinearitäten im Phasenverlauf führt (bei einer monotonen Entwicklung ist es ein zusätzlicher quadratischer Phasenterm), die die Messgenauigkeit und Trennfähigkeit bei der Messung der Relativgeschwindigkeit beeinträchtigen.

Wenn nämlich die Mittenfrequenzen von Rampe zu Rampe variieren, so ist in Gleichung (2), die die Geschwindigkeitsabhängigkeit der Dopplerfrequenz $f_D$ angibt, die Größe $f_c$ in jeder Rampe mit dem Index j durch die Größe $f_{c,j}$ zu ersetzen. Einsetzen der Gleichungen (1) und (2) in Gleichung (5) liefert dann für das Zwischenfrequenzsignal s den folgenden Ausdruck:

$$s(k,j) = \exp(i(4\pi R f_{c,j} / c + 2\pi (2 R f_h / c \, T'_c + 2 f_{c,j} v / c) k T$$

$$+ 4\pi f_{c,j} (v / c) (j-1) T'_c)) \tag{7}$$

Wenn, wie in dem in Fig. 7 gezeigten Beispiel die Mittenfrequenz in jeder Rampe um den gleichen Frequenzversatz $f_s$ erhöht wird, so erhält man für die Mittenfrequenzen $f_{c,j}$ den folgenden Ausdruck:

$$f_{c,j} = f_{c,1} + (j-1) f_s \tag{8}$$

Setzt man diesen Ausdruck in Gleichung (7) ein, so sind die beiden ersten Terme

$$4\pi R f_{c,j} / c = 4\pi R (f_{c,1} + (j-1) f_s) / c \tag{9}$$

und

$$4\pi (R f_h / c \, T'_c + f_{c,j} v / c) k T = 4\pi (R f_h / c \, T'_c + (f_{c,1} + (j-1) f_s) v / c) k T \tag{10}$$

linear in j. Für den dritten Term erhält man jedoch:

$$4\pi (f_{c,j} v / c) (j-1) T'_c = 4\pi ((f_{c,1} + (j-1) f_s) v / c) (j-1) T'_c$$

$$= 4\pi (v/c) T'_c (-f_{c,1} + f_s + (f_{c,1} - 2f_s) j + f_s \, j^2) \tag{11}$$

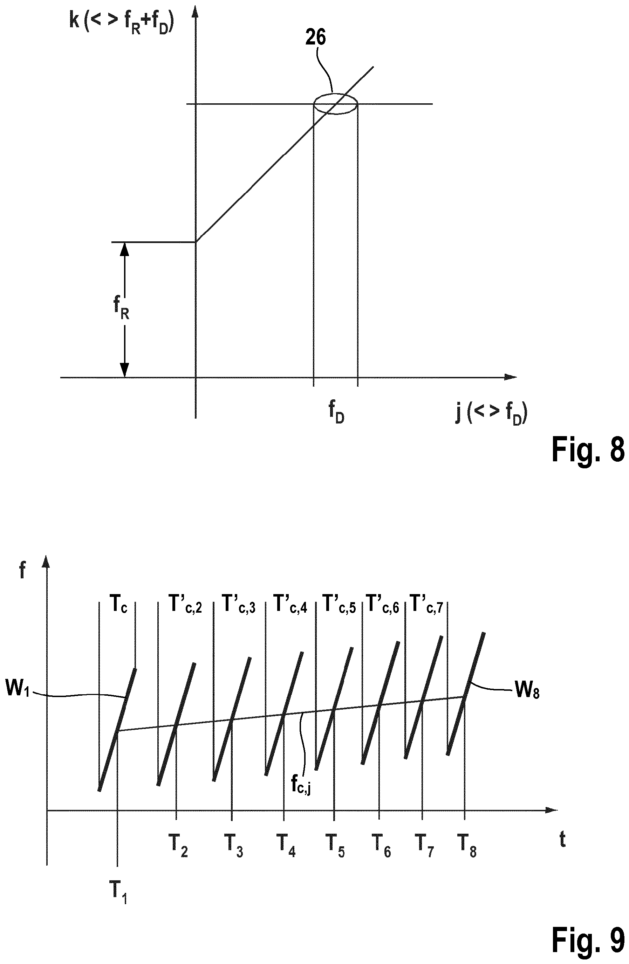

Dieser Term enthält neben einem zu dem Index j proportionalen Anteil auch einen Anteil, der zu $j^2$ proportional ist. Der durch diesen Term beschriebene Phasenverlauf ist also nichtlinear in j. Bei der Fourier-Transformation über den Rampenindex j führt dies zu einer Peakverbreiterung im $f_R + f_D / f_D$-Diagramm, wie in Fig. 8 gezeigt ist. Die Dopplerfrequenz $f_D$ und damit die Relativgeschwindigkeit lässt sich deshalb nur in einem relativ breiten Genauigkeitsintervall bestimmen, und entsprechend ist auch bei zwei Objekten mit sehr ähnlicher Relativgeschwindigkeit die Trennfähigkeit herabgesetzt, da die zugehörigen Peaks nicht mehr voneinander unterschieden werden können. Auch die Genauigkeit der Abstandsschätzung wird durch diesen Effekt beeinträchtigt, wodurch der Vergrößerung des Frequenzversatzes $f_s$ Grenzen gesetzt werden.

Um diesen Effekt zu vermeiden werden bei einer erfindungsgemäßen Weiterbildung des oben beschriebenen Verfahrens nicht nur die Mittenfrequenzen $f_{c,j}$ variiert, sondern auch die zugehörigen Sendezeitpunkte $T_j$ der einzelnen Wellenzüge $W_j$ und damit auch die zeitlichen Abstände $T'_c$, mit denen die Rampen 24 aufeinanderfolgen.

Speziell werden die Sendezeitpunkte $T_j = T_{j-1} + T'_{c,j}$ so gewählt, dass die zeitlichen Abstände $T'_{c,j}$ zwischen den Wellenzügen die folgende Beziehung erfüllen:

$$T'_{c,j} * f_{c,j} = X \tag{12}$$

Darin ist X ein Parameter, der für den gesamten Messzyklus, also für alle N Wellenzüge konstant ist und je nach Anwendungszweck geeignet gewählt werden kann. Als Referenzzeitpunkt für den ersten Wellenzug kann $T_0 = -T'_{c,1}$ definiert werden.

Gleichung (12) liefert nun für den dritten Term anstelle von Gleichung (11):

$$4\pi f_{c,j} (v / c) (j-1) T'_c = 4\pi (v / c) (j-1) X \, j \tag{13}$$

Für alle Wellenzüge $W_j$ ist somit auch der Phasenterm eine lineare Funktion des Index j.

Die in Gleichung (12) definierte Bedingung sorgt somit dafür, dass der Phasenverlauf linearisiert wird und dementsprechend die Peakverbreiterung bei der Fouriertransformation über j vermieden wird. Dadurch gewinnt man bei der Wahl der Mittenfrequenzen $f_{c,j}$ der einzelnen Wellenzüge zusätzlichen Spielraum, der beispielsweise dazu genutzt werden kann, die Genauigkeit der Abstandschätzung zu verbessern, ohne dass Kompromisse bei der Geschwindigkeitsschätzung gemacht werden müssen.

In Fig. 9 ist das erfindungsgemäße Modulationsschema in Diagrammform dargestellt. Die Intervalle $T'_{c,j}$ (hier gezeigt für j = 2 ... 7) sind nicht gleich, sondern sie nehmen in diesem Beispiel von Wellenzug zu Wellenzug ab, wodurch die Zunahme der Mittenfrequenzen $f_{c,j}$ kompensiert wird. Das erste Intervall $T'_{c,1}$ ist so groß gewählt, dass auch für das kleinste (hier das letzte) Intervall noch die Bedingung erfüllt ist, dass die Intervalllänge größer ist als die Rampendauer $T_c$.

Die Sendezeitpunkte $T_1$ -$T_8$ sind in diesem Beispiel definiert als die Zeitpunkte, zu denen die Frequenz des Sendesignals auf der jeweiligen Rampe die Mittenfrequenz erreicht. Wenn, wie in diesem Beispiel, alle Rampen die gleiche Steigung und den gleichen Frequenzhub haben, könnte äquivalent beispielsweise auch der Beginn jeder Rampe oder das Ende jeder Rampe als Sendezeitpunkt definiert werden. In einem allgemeineren Fall, in dem die Rampen unterschiedliche Steigungen und/oder unterschiedlichen Frequenzhub haben oder nichtlinear sind, wären die Zeitpunkte für den Beginn jeder Rampe so zu wählen, dass die Beziehung gemäß Gleichung (15) für die Zeitpunkte gilt, an denen die Frequenz jeweils die Mittenfrequenz erreicht.

Während in diesem Beispiel die einzelnen Wellenzüge $W_j$ durch Pausen getrennt sind, könnten in einer anderen Ausführungsform die Sendezeitpunkte $T_j$ beispielsweise auch dadurch variiert werden, dass man die Rampendauer $T_c$ variiert.

Die Erfindung ist indessen nicht auf rampenförmige Modulationsschemata beschränkt, sondern lässt sich mit einem anderen Modulationsschema einsetzten, das das gleiche Auswerteprinzip zur Abstands- und Geschwindigkeitsschätzung durch zweidimensionale Frequenzanalyse aufweist (z.B. OFDM-Radar).

Das oben beschriebene Verfahren bietet ein hohes Maß an Flexibilität hinsichtlich der Wahl der Mittenfrequenzen für die aufeinanderfolgenden Wellenzüge. Es lässt sich deshalb in allen Fällen mit Vorteil einsetzen, in denen aus irgendeinem Grund die Mittenfrequenzen variiert werden sollen, beispielsweise auch in den Fällen, in denen in kognitiven Radarsensoren durch die Änderung der Mittenfrequenzen Interferenzen mit Radarsignalen anderer Radarquellen vermieden werden sollen. Der Radarsensor kann dabei auch mehrere Sende- und/oder Empfangsantennen aufweisen und insbesondere auch als winkelauflösender MIMO-Radarsensor gestaltet sein.

**Patentansprüche**

1. Radarsensor für Kraftfahrzeuge, mit einem Signalgenerator (13), der dazu konfiguriert ist, ein Radarsignal zu erzeugen, das eine sich zyklisch wiederholende Folge von N Wellenzügen $W_j$, j = 1, ..., N enthält, die aufeinanderfolgend in zeitlichen Abständen $T'_{c,j}$ gesendet werden und die jeweilige Frequenzbänder belegen, die sich in ihren Mittenfrequenzen $f_{c,j}$ voneinander unterscheiden, **dadurch gekennzeichnet, dass** für die zeitlichen Abstände $T'_{c,j}$ und die Mittenfrequenzen $f_{c,j}$ die Beziehung:

$$T'_{c,j} * f_{c,j} = X$$

mit einem konstanten Parameter X gilt.

2. Radarsensor nach einem der vorstehenden Ansprüche, in der Form eines FMCW-Radars.

3. Radarsensor nach Anspruch 1 oder 2, bei dem der Frequenzverlauf innerhalb jedes einzelnen Wellenzuges $W_j$ durch eine lineare Rampe (24) beschrieben wird.

4. Radarsensor nach Anspruch 3, bei dem alle Wellenzüge $W_j$ den gleichen Frequenzhub haben.

5. Radarsensor nach Anspruch 3 oder 4, bei dem alle Wellenzüge $W_j$ die gleiche Rampensteigung haben.

6. Radarsensor nach Anspruch 1, in der Form eines OFDM - Orthogonal Frequency Division Multiplex -Radars.

7. Radarsensor nach einem der vorstehenden Ansprüche, ausgestaltet als kognitiver Radarsensor, bei dem die Mittenfrequenzen im Hinblick auf Radarsignale anderer Radarquellen adaptiert werden.

**Claims**

1. Radar sensor for motor vehicles, comprising a signal generator (13) configured to generate a radar signal which contains a cyclically repeating sequence of N wave trains $W_j$, j = 1, ..., N, which are emitted successively at temporal intervals T'$_{c,j}$ and which occupy respective frequency bands that differ from one another in terms of their mid frequency f$_{c,j}$, **characterized in that** the time intervals T'$_{c,j}$ and the mid frequencies f$_{c,j}$ satisfy the following relationship:

$$T'_{c,j} * f_{c,j} = X$$

with a constant parameter X.

2. Radar sensor according to any one of the preceding claims, in the form of an FMCW radar.

3. Radar sensor according to Claim 1 or 2, wherein the frequency curve within each individual wave train W$_j$ is described by a linear ramp (24).

4. Radar sensor according to Claim 3, wherein all wave trains W$_j$ have the same frequency deviation.

5. Radar sensor according to Claim 3 or 4, wherein all wave trains W$_j$ have the same ramp slope.

6. Radar sensor according to Claim 1, in the form of an OFDM - orthogonal frequency division multiplex - radar.

7. Radar sensor according to any one of the preceding claims, configured as cognitive radar sensor, wherein the mid frequencies are adapted in view of radar signals from other radar sources.

**Revendications**

1. Capteur radar pour véhicules automobiles, comprenant un générateur de signal (13) qui est configuré pour générer un signal radar qui comporte une séquence répétée de manière cyclique de N trains d'ondes W$_j$,j = 1, ..., N qui sont envoyés successivement à des intervalles de temps T'$_{c,j}$ et occupent les bandes de fréquence respectives qui se distinguent les unes des autres par leurs fréquences centrales f$_{c,j}$, **caractérisé en ce que** pour les intervalles de temps T'$_{c,j}$ et les fréquences centrales f$_{c,j}$ la relation :

$$T'_{c,j} * f_{c,j} = X$$

avec un paramètre X constant s'applique.

2. Capteur radar selon l'une quelconque des revendications précédentes, sous la forme d'un radar FMCW.

3. Capteur radar selon la revendication 1 ou 2, dans lequel la courbe de fréquence à l'intérieur de chaque train d'ondes individuel W$_j$ est décrite par une rampe linéaire (24).

4. Capteur radar selon la revendication 3, dans lequel tous les trains d'ondes W$_j$ ont le même décalage de fréquence.

5. Capteur radar selon la revendication 3 ou 4, dans lequel tous les trains d'ondes W$_j$ ont la même pente de rampe.

6. Capteur radar selon la revendication 1, sous la forme d'un radar OFDM, à multiplexage par répartition orthogonale en fréquence.

7. Capteur radar selon l'une quelconque des revendications précédentes, conçu sous la forme d'un capteur radar cognitif dans lequel les fréquences centrales sont adaptées en vue de signaux radar d'autres sources radar.

**Fig. 1**

**Fig. 2**

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014075838 A1
- WO 2015197226 A1
- WO 2014195046 A
- DE 102013200404 A1
- DE 102013212090 A1
- DE 2015202874 A1